# EUROPEAN PATENT SPECIFICATION

(11) **EP 3 716 788 B1**
(45) Date of publication and mention of the grant of the patent: **27.12.2023**
(21) Application number: 18804407.7
(22) Date of filing: 24.10.2018
(51) Int. Cl.: A23B 4/005, A23B 7/005, B65D 81/20, A23L 19/00, A23B 7/01, A23B 7/148, A23L 3/02, A23L 3/10, A23L 3/3418, A23B 4/01

(54) **PROCESS FOR OBTAINING A PACKAGED FOOD PRODUCT**
VERFAHREN ZUR HERSTELLUNG EINES VERPACKTEN LEBENSMITTELPRODUKTS
PROCÉDÉ POUR OBTENIR UN PRODUIT ALIMENTAIRE EMBALLÉ

(30) Priority: 25.10.2017 IT 201700121460
(43) Date of publication of application: 07.10.2020
(73) Proprietor: Food Solution S.r.l., 39100 Bolzano (IT)
(72) Inventor: POZZOBON, Stefano, 31030 Casier (TV) (IT)
(74) Representative: Braidotti, Andrea
(86) International application number: PCT/IB2018/058291
(87) International publication number: WO 2019/082092

(56) References cited:
- EP-A1- 0 415 788
- EP-A1- 2 337 459
- WO-A1-92/03934
- WO-A1-92/08361
- WO-A1-97/02181
- WO-A1-2009/100509
- WO-A1-2015/065489
- RU-C2- 2 247 519
- US-A1- 2004 156 960

## Description

The present invention relates to an improved process for producing/obtaining a packaged product, preferably a packaged food products and/or to be used for cosmetics and phytocosmetics, in particular packaged foods in the state of cream, purée, in pieces or whole, both of plant and of animal origin, as well as packaged products of plant and/or animal origin and/or extraction to be used for cosmetics.

In the field of food processing, in particular fruit products, processes for producing pulp or fruit purée and for storing them in special packs to be subsequently used in various foods, such as fruit juices or ice cream garnishes or desserts are known.

In particular these procedures, in general, include conventional processing of fresh fruit, such as washing, peeling, pitting. In the case of frozen a defrosting phase will suffice. Subsequently, the fruit is minced, crushed and/or sieved to obtain a slurry which is subsequently treated with chemical and/or physical treatments to remove or prevent the formation of bacteria and/or contaminated substances. Such treatments can be carried out even after the fruit, reduced in purée, is poured into special containers or packs and sealed to guarantee the preservability of the product.

Generally, fruit-based food products such as fruit juices are stored in plastic bottles sealed with special plastic caps, possibly with the interposition of an aluminium foil sealing the top of the bottles. Alternatively, cardboard or tetrapak or glass containers are used. In particular, in the case of fruit purée, plastic trays are closed with an aluminium foil and kept for a few days at +4°C.

This procedure, although widely used, is not without drawbacks. First, in the case where fresh fruit is used, all the above-mentioned preparation phases must be carried out in an environment adapt to preserve the hygiene, which unfortunately is hard to obtain other than by following operations that result complicated and expensive due to the needed environments and equipment or operators themselves. Furthermore, it has been observed that the use of ready-made and frozen fruit does not actually facilitate processing because the frozen fruit is often found to be contaminated at the origin and, in addition, must be thawed in order to be processed with the consequence that the bacterias are activated.

These drawbacks have already been solved by using the chemical/physical treatments previously exposed. However, these chemical treatments require the use of substances that on one hand can always represent a damage to health and on the other hand certainly do not find appreciation from the consumer who is always reluctant to buy and consume foods containing artificial preservatives.

Furthermore, as far as heat treatments are concerned, it has been noticed that the thermally treated fruit purée acquires a brown color and a flavor of cooked fruit which is an alteration of the organoleptic characteristics typical of fresh fruit. As a consequence, even these purées do not receive particular appreciation from consumers.

In addition, as explained above, the products currently on the market are packed in rigid or semi-rigid packages which are not fit for the use with a fruit purée. In fact, pouring a purée from a similar container is particularly laborious given the dense nature of the product.

In this context, EP2337459 describes a process for the production of a package containing pulp or fruit or vegetable purée able to guarantee the preservation, at room temperature and without the need for chemical preservatives, of the organoleptic characteristics of fresh fruit and vegetables.

However, the procedure presented in EP2337459 is specifically designed and used only for the packaging of fruit or vegetables in the form of a purée, and therefore does not teach either how to package whole fruits or vegetables, in pieces or in cream form, or how to package other foods, such as meat.

Moreover, also for the packaging of fruit or vegetables in the form of purée, the procedure of EP2337459 is not completely satisfactory since the use of envelopes with an aluminum layer means that, following the heat treatment and in particular the cooling, they create on the envelope itself the unpleasant surface folds that are not aesthetically pleasing and, moreover, are responsible both for cracks in the outer polyester layer, thus comrpomising the integrity of the package, and the formation of edges that can pierce other envelopes during the packaging phase.

Furthermore, the presence of an aluminum layer may cause detachment of the resins used to attach it to the remaining plastic layers, in particular when the aforesaid layer is not perfectly degreased by the lubricants which, in case of its storage before use, prevent oxidation.

Last but not least, the fact that the use of envelopes with an aluminum layer leads to very high disposal costs.

In this context WO 92/03934, WO 92/08361 and EP 0415788 have three similar methods for the preparation of packaged foods in which the food, possibly precooked, is inserted inside an envelope so as to completely fill it; subsequently, after packaging the bag with the food under a vacuum, a pasteurization process is carried out keeping the packaged food at a temperature of at least 85°C, in particular between 85°C and 115°C. More in detail, when the pasteurization phase is carried out at a temperature lower than or equal to 100°C, it is not necessary to use a pressurized heating system and, more in detail, the process is carried out at atmospheric pressure using hot water or steam to heat the product. Once heated, the packed food is then allowed to slowly cool to room temperature.

This method, however, is not completely satisfactory because the slow cooling at room temperature could cause the alteration of the organoleptic characteristics of the food.

US 2004/0156960 presents a method for storing food in which the food is placed in a container so as to completely fill it. The container with the food, after being sealed, is subjected to a pasteurisation heat treatment of 82-99°C and then is rapidly cooled to a temperature below 12°C. The packaged food thus obtained is then, however, stored under refrigeration conditions: 1-4°C. In particular, after cooling, the packaged food must be immediately placed in a refrigerated environment, avoiding therefore to expose it to room temperature.

Also, this method is not completely satisfactory since it requires that the conservation of the food thus packaged takes place exclusively within a refrigerated environment and not at room temperature.

WO97/02181 describes a method for the treatment of a food container which provides a heat treatment in which temperatures higher than 100°C are used during the temperature increase and maintenance phase, reaching in particular temperatures of 110°C or 121 °C. Moreover, during the thermal treatment phase, the pressure inside the autoclave (and therefore acting externally on the walls of the container) is varied and, in particular, is higher than atmospheric during the phases of increase and maintenance of the temperature, while during the cooling phase the pressure is adjusted so as to apply on the outer walls of the container a support pressure that is greater than about 1 bar with respect to that inside the closed container and this in order to vary or modify the concavity that formed on the container during the temperature maintenance phase.

WO2009/100509 describes a method for food preservation which comprises the sequence of the following phases:
- the food is placed in the container in order to fill from 70% to 95% of the effective internal volume of the used container.
- the container and the food are heated while the food is kept in contact with the atmospheric air outside the container,
- the gaseous composition inside the container is changed with the food and, in particular, the gases present inside the container are removed and non-oxidizing gases (H2, N2, CO2 or others) are injected into the latter,
- close and seal the container with food, and
- the container with the food is subjected to a heat treatment, thus closed and sealed; in particular, this thermal treatment phase comprises a heating sub-phase (lasting 25-60 minutes) until reaching a temperature of 65-120°C, a maintenance sub-phase (lasting 40-60 minutes) at the temperature previously reached and a cooling sub-phase (lasting 10-50 minutes) to reach room temperature.

The thermal treatment phase is carried out by immersing and keeping the container underwater in an autoclave at a controlled pressure of 0.7 to 2.9 atm, preferably about 1.5 to 2.2 atm.

RU2247519 describes a method for storing food inside plastic containers. In particular, this method provides for a heat-treatment phase of the container with the food inside, which is carried out in a pasteurizer, and which comprises:
- a heating sub-phase up to a temperature of about 95°C during which the pressure increases up to about 1.7 atm,
- a temperature maintenance sub-phase at about 95-100°C,
- a cooling sub-phase in which at first cold water is introduced inside the autoclave while, at the same time, compressed air is sent at 1.4 atm; subsequently, once the container has reached 75°C, the flux of compressed air is discontinued and the pressure in the autoclave is decreased to atmospheric pressure while the water in the autoclave cools the containers up to 28°C.

The object of the invention is to propose an improved process for the production of a packaged product, preferably a packaged food product which overcomes the drawbacks of traditional methods and which can be used for the packaging of food products either of plant origin (such as fruit or vegetables) or of animal origin, both in whole pieces and in the form of purée.

Another object of the invention is to propose a process for the production of a packaged product, preferably a packaged product to be used for cosmetics or phytocosmetics which overcomes the drawbacks of traditional methods and which can be used for packaging products of plant origin and/or extraction and/or animal to be used for cosmetics.

Another object of the invention is to propose a process which is simple, rapid and economical to implement.

Another object of the invention is to propose a process which allows to considerably reduce the preparation times of the packaged product.

Another object of the invention is to propose a process which allows to considerably reduce the energy consumption required for the preparation of the packaged product.

Another object of the invention is to propose a process which allows to obtain a packaged food product which guarantees the preservation of the organoleptic and/or nutritional characteristics of the original food to be packaged.

Another object of the invention is to propose a process which allows to obtain a packaged product which is practical to use, easy to handle and ready to use.

Another object of the invention is to propose a process that allows to obtain a packaged product that is hygienic and safe at the sanitary level.

Another object of the invention is to propose a process which allows to obtain a packaged product which does not use or require artificial preservatives.

A further object of the invention is to propose a process which allows to obtain a packaged product which can also only be stored at room temperature and, in particular, which can be stored outside refrigerated environments.

A further object of the invention is to propose a process which allows to considerably increase the shelf life of the packaged product.

Another object of the invention is to propose a process that can be implemented and applied on an industrial scale.

Another object of the invention is to propose a process which has an alternative and/or improved characterization with respect to the traditional ones.

A further object of the invention is to propose a simple and inexpensive system for implementing the phases of the aforementioned process in sequence and in a single environment.

All these objects, either individually or in any combination thereof, and others which will result from the following description, are achieved, according to the invention, by a process with the features indicated in claim 1.

In particular, the process for the production of a packaged product, preferably of a packaged food product or of a packaged product to be used for cosmetics/phytocosmetics, is characterized in that it comprises the sequence of the following phases:
a) provide a product to be packaged;
b) bringing said product to be packaged, which has been provided, at a temperature of 60-65°C;
c) partially filling with said product, which is at a temperature of 60-65°C, an envelope of flexible and expandable material:
d) creating a vacuum inside said envelope;
e) sealing said envelope after the previous vacuum creation phase;
f) thermally treating the envelope thus obtained, and partially filled with said product, by successive sub-phases comprising:
   1. a first heating sub-phase to bring the envelope to a temperature of about 80°- 95°C,
   2. a second sub-phase of maintaining the envelope at the aforementioned temperature of about 80°- 95°C reached in the previous sub-phase, and
   3. a third cooling sub-phase of the envelope to bring it to a temperature equal to or lower than about 14°C,
and said process being characterized in that, during said thermal treatment phase, the pressure externally exerted on said envelope, which is partially filled by said product, is lower than the pressure present inside the envelope, thus allowing said envelope to vary its internal volume during said thermal treatment phase,
and being further characterized in that:
during the heating sub-phase f1), the pressure inside the envelope increases, passing from a first initial value, in which it substantially balances the pressure external to the envelope, to a second value that is greater than external pressure,
during the heating sub-phase f1), the envelope, partially filled and occupied with the food, increases its internal volume from an initial value to a second value which is greater than the initial one, and thus passes from an initial condition to a dilated/expanded condition, during the maintenance sub-phase f2) of the heating temperature, the pressure outside the envelope remains always lower than the pressure that is present inside it, during the maintenance sub-phase f2) of the heating temperature, the envelope, partially filled with the food, maintains the volume inside at said second value, which it is greater than the initial one, and thus maintains its achieved dilated/expanded condition, during the rapid cooling sub-phase f3), the pressure inside the envelope varies and decreases, passing from said second value, which has been reached and maintained during the previous sub-phases, to a value in which substantially balances the external pressure, and during the rapid cooling sub-phase f3), the envelope, partially filled and occupied with the food, decreases its volume which passes from said second value to the initial value, thus passing from the dilated/expanded condition to the initial condition. Advantageously, the thermal treatment phase is carried out by dipping or submerging in water the envelope partially occupied/filled with the food. Advantageously, the thermal treatment phase is carried out by submerging or dipping the envelope, partially occupied/filled with the food, in the water contained in a tank and on which a pressure substantially equivalent to atmospheric pressure is exerted. Advantageously, during the thermal treatment phase the envelopes float on the water contained in a tank and that said heating f1), maintenance f2) and cooling f3) sub-phases are carried out by correspondingly controlling the temperature of the water of said tank. Advantageously, the thermal treatment phase is carried out inside an autoclave. Advantageously, a first compression and/or a maintenance f2) sub-phase is performed so that the pressure externally acting on the envelope substantially passes from 1.0 atm at 1.5 atm. Advantageously, before and/or during the cooling sub-phase f3), a decompression is carried out so that the pressure acting externally on the envelope substantially passes from 1.5 atm. at 1 atm. Advantageously, during the thermal treatment phase f), the pressure externally exerted on the envelope has the following trend:
   - at the beginning of the heating sub-phase f1) and during this whole sub-phase the pressure increases from the initial value equal to about 1 atm and grows up to a maximum value preferably equal to about 1.5 atm,
   - at the end of the heating sub-phase f1) and before the start of the maintenance sub-phase f2) the pressure increases (compression) and remains at the maximum value previously reached, and preferably remains at about 1.5 atm,
   - during the maintenance sub-phase f2) the pressure is maintained at the maximum value which was previously reached, and preferably it is maintained at about 1.5 atm,
   - at the end of the maintenance sub-phase f2) and before the start of the abatement sub-phase f3) the pressure decreases (decompression) and gradually passes from the maximum value, preferably equal to about 1.5 atm, to a value of about 1 atm,
   - during the cooling sub-phase f3) the pressure is maintained at about 1atm.

Advantageously, the method comprises a phase in which said product to be packaged is provided in pieces. Advantageously, the method comprises a phase in which said product to be packaged is provided as a purée. Advantageously, the method comprises a phase in which said product to be packaged is provided in the form of a cream. Advantageously, the method comprises a phase in which said product to be packaged is provided already cooked. Advantageously, said phase b), in which the product is brought to a temperature of about between about 60°C and 65°C, is carried out by bringing the product first to a temperature above 60-65°C and then letting it cool until it reaches a temperature between 60°C and 65°C. Advantageously, said phase b), in which the product is brought to a temperature of 60-65°C, is carried out by keeping the food, which has been provided, under stirring, until it reaches a temperature of 60-65°C. Advantageously, before and/or during said phase b) in which the products are brought to a temperature of 60-65°C, the pH of said products is controlled and brought to a value between 1.2 and 5.6, preferably between 1.2 and 4.6. Advantageously, the pH is controlled by the addition of acidic substances. Advantageously, the pH is controlled by addition of glucone delta-lactone. Advantageously, before and/or during said phase b) in which the products are brought to a temperature equal to or greater than 60°C, fructose is added. Advantageously, before and/or during said phase b) in which the products are brought to a temperature equal to or higher than 60°C, a substance or a lubricating composition is added. Advantageously, the envelope is partially filled with said product when said product is at a temperature between about 60°C and 65°C. Advantageously, said envelopes are made of food-grade material and are designed to expand and widen, without causing irreversible deformations, breakages or damage, in the presence of a pressure inside the envelope of about 3 atm. Advantageously, said envelope comprises exclusively layers of polymeric material, that is without any metal layer or film. Advantageously, said envelope comprises a layer painted with metallized paint. Advantageously, said envelope comprises a thin layer of metal, preferably of aluminium. Advantageously, in said partial filling phase of said envelope, the food is inserted inside the envelope so as to fill it at most for about 70% of its useful volume. Advantageously, in said partial filling phase of said envelope, the food is inserted inside the envelope so as to fill it at most at about 50% of its useful volume. Advantageously, during the phase e) of sealing the envelope, which is fully automated, the stage d) of creation of the vacuum is carried out. Advantageously, an inert gas is introduced during the phase of d) of creation of the vacuum. Advantageously, for products with a pH equal to or near 1.2 the thermal treatment is carried out at a temperature of about 80-85°C. Advantageously, for products with a pH equal to or near 4.6 the thermal treatment is carried out at a temperature of about 95°C. Advantageously, said thermal treatment lasts about 60-90 minutes in which:
- said first heating sub-phase f1) up to a temperature of about 80-95°C with a duration equal to or less than about 35 minutes,
- said second maintenance sub-phase f2) of the temperature of 80-95°C has a duration equal to or less than about 40 minutes,
- said third cooling sub-phase f3) up to a temperature equal to or lower than about 14°C has a duration equal to or less than about 25 minutes, preferably less than about 15 minutes.

Advantageously, said heat treatment lasts for a maximum of about 60 minutes, wherein:
- said first heating sub-phase f1) up to a temperature of about 80-95°C has a maximum duration of about 15 minutes,
- said second maintenance sub-phase f2) of the temperature of 80-95°C has a maximum duration of about 30 minutes,
- said third cooling sub-phase f3) up to a temperature of 4°C with a maximum duration of about 15 minutes.

Advantageously, said product to be packaged comprises a food, of vegetable or animal origin, whole or in pieces or in the form of a purée or cream. Advantageously, said product to be packaged comprises a product to be used for preparing or for obtaining substances or compositions for cosmetics or phytocosmetics.

The present invention is hereinafter further clarified in some of its preferred embodiments described below for purely exemplifying and non-limiting purposes.

Preliminarily, it is also specified that "food product" or "food" here it generally stands for any substance intended to be ingested, which can be constituted by a single component or by a plurality of components.

Furthermore, it should be noted that the term "whole or in pieces" food in the present description stands for foods having a size substantially greater than 5mm and, preferably, deprived of the non-edible part.

Further, it is specified that the terms "purée" or "pulp" in the present description stand for a fluid but dense semi-finished product similar to a nonhomogeneous (raw) slurry of substances, preferably but not necessarily uncooked, and obtained by different crushing, blending, homogenization, emulsion and possible combinations thereof.

Further, it is specified that the term "cream" in the present description means a fluid but smooth semi-finished product similar to a homogeneous mixture of substances.

Further, it is specified that "product to be used for cosmetics" means any product to be used alone and/or in combination with other products to obtain a substance/composition intended to be applied on the body or a part thereof for the purpose of hygiene, fragrance, protection, modification of the aesthetic aspect. In particular, it is specified that "product to be used for phytocosmetics" means any vegetable product to be used to obtain a substance/composition of plant origin and/or extraction intended to be applied on the body or a part thereof for the purpose of hygiene, fragrance, protection, modification of the aesthetic aspect. For example, the "product to be used for cosmetics/phytocosmetics" may include rice to then get rice oil, may include coconut to then get coconut oil, may include almonds to then get almond oil, etc.

A process for the production of a packaged food product will be described below, however it is understood that the same process can be used for the production of a packaged product for use in cosmetics/phytocosmetics.

The process according claim 1 for producing a packaged food comprises the sequence of the following phases:
a) provide a food to be packaged, both of plant or animal origin, this food being whole, in pieces, in the form of purée or cream;
b) bringing the food, which has been provided, at a temperature of 60-65°C;
c) partially filling with said food -which is at a temperature of 60-65°C- an envelope made of flexible, expandable material suitable for food use;
d) creating a vacuum inside said envelope;
e) sealing said envelope after the previous vacuum creation phase;
f) heat-treating the envelope thus obtained, and filled with the food, with successive sub-phases comprising:
   1. a first heating sub-phase to bring the envelope to a temperature of about 80-95°C,
   2. a second sub-phase in which the envelope is maintained at the aforementioned temperature of about 80-95°C reached in the previous phase, and
   3. a third, preferably abrupt cooling (abatement) sub-phase to bring it to
      a temperature equal to or less than about 14°C, preferably about 4°C.

During the thermal treatment phase f), the pressure acting on the outer walls of the envelope (called "external pressure") is lower than the pressure acting on the inner walls of the envelope (called "internal pressure"), thus allowing the envelope, partially filled with said food, to expand and thus increase its internal volume.

In particular, during the thermal treatment phase f), the pressure externally acting on the envelope (i.e. on the outer surfaces of the envelope) is kept constant and, preferably, corresponds substantially to atmospheric pressure. Suitably, in this way, phase f) is carried out under substantially isobaric conditions and, therefore, the temperature variations during this phase involve variations in the internal volume of the envelope which, for this purpose, is made of flexible and expandable material. In other words, the aforementioned phase f) would not be applicable with rigid containers which cannot expand/enlarge and/or which, due to the expansion/enlargement due to the increase in temperature, remain deformed or permanently damaged.

During the first heating sub-phase f1), the envelope with the food inside is brought to a temperature of about 80-95°C and, therefore, also the food itself - which has been inserted into the envelope when it is at a temperature of about 60-65°C,even though a slight cooling that can occur during phases d) and e) has to be taken into account - it is brought to a temperature of about 80-95°C.

During the second temperature maintenance sub-phase f2), the envelope with the food inside is kept at a temperature of about 80°C or about 85°C or about 90°C or about 95°C.

Advantageously, during the thermal treatment phase f) the pressure can be suitably controlled so that the pressure externally acting on the envelope (i.e. on the outer surfaces of the envelope) is never substantially greater than about 1.5 atm, preferably never more than about 1 atm.

Advantageously, during the thermal treatment phase f) the pressure can be appropriately controlled so that it remains substantially constant and, preferably, remains constant at a value substantially corresponding to the atmospheric pressure.

Preferably, the thermal treatment phase f) is carried out by flooding/immersing the envelope (with the food inside) in the water which is contained in a tank and on which a pressure substantially corresponding to the atmospheric pressure is exerted. Appropriately, this method of heat treatment offers better performances in terms of heat exchange efficiency and allows to maintain a more homogeneous pressure with respect to the heating with air/steam flow.

Alternatively, it is still possible to carry out the heat treatment f) in a traditional or continuous flow autoclave. In this case, opportunely, to allow the heated envelope to expand/inflate and, at the same time, to avoid excessive expansion/inflation which could lead to irreversible deformation, breakage or damage to the envelope, during the heating sub-phases f1) and/or maintenance sub-phase f2), preferably before the start of the maintenance sub-phase f2), a light and rapid compression is carried out so that the pressure externally acting on the envelope substantially passes from 1.0 atm to 1.5 atm, but still less than about 1.5 atm. Advantageously, before and/or during the cooling sub-phase f3), in order to allow the expanded/inflated envelope to shrink and return to its initial volume, a rapid decompression is carried out so that the pressure acting externally on the envelope decreases from 1.5 atm to 1 atm.

Preferably, when the thermal treatment phase f) is carried out inside the autoclave, the pressure externally exerted on the envelope during this phase has the following trend:
- at the beginning of the heating sub-phase f1) and during this whole sub-phase the pressure increases from the initial value equal to about 1 atm and grows up to a maximum value preferably equal to about 1.5 atm,
- at the end of the heating sub-phase f1) and before the start of the maintenance sub-phase f2) the pressure increases (compression) and remains at the maximum value previously reached, and preferably remains at about 1.5 atm,
- during the maintenance sub-phase f2) the pressure is maintained at the maximum value previously reached, and preferably maintained at about 1.5 atm,
- at the end of the maintenance sub-phase f2) and before the start of the cooling sub-phase f3) the pressure decreases (decompression) and gradually passes from the maximum value, preferably equal to about 1.5 atm, to a value of about 1 atm,
- during the cooling sub-phase f3) the pressure is maintained at about 1atm.

In particular, the pressure variation is used to counter - in the case of an isobaric heating - the increase in volume due to the expansion of the gas present in the partially filled envelope.

In particular, phase a) of making food available, for example fruit or vegetables, takes place conventionally through the supply of fresh fruit or vegetables, either whole or in pieces, coming from a warehouse or frozen in a suitable freezer.

Advantageously, in the first case, fresh fruit or vegetables, after a careful choice to avoid using unsuitable ones (damaged by atmospheric agents or transport), passes to the external cleaning phase. This phase is carried out with the aid of water and a brush system, preferably by means of a mopping system and water added with ozone. Also, in this phase, samples are taken to test for the presence of pesticides or other chemicals. The following phases are those of peeling, stalk removal, coring or pitting. In the case of whole fruit or vegetables, this can be appropriately cut into pieces.

Conveniently, in the case of fresh fruit particularly subject to rapid oxidation after peeling, it is preferred a pre-treatment with acidic solutions suitable for food use such as, for example, citric acid, to slow down the oxidation. In case frozen fruit or vegetables are used only the edible part is provided, i.e. without skin, cores or seeds. Also, in this case, a sampling is preferably carried out to test for the quality of fruit or vegetables in a laboratory.

In case of production of a pulp or fruit or vegetable purée, the process according to the invention comprises all the aforesaid phases a) - f) with the same characteristics, with the addition of an additional passage wherein the fruit or chopped vegetables, which is provided, is treated in such a way as to obtain a homogeneous semi-finished product in the form of a purée. More specifically, for this purpose, phase a) also includes the processing of fruit or vegetables, prepared as described above, by their insertion in a reduction system comprising a traditional cutter; this makes it possible to obtain a homogeneous purée preferably having a density of between 1, 00 and 1.10 g/ml, preferably between 1.02 and 1.08 g/ml calculated according to the DEN001U.AB method.

Conveniently, in the case of production of a package of a cream of vegetable origin (for example a cream of radicchio) or animal (such as a chicken cream), the process according to the invention comprises all the aforesaid phases a) - f ), with the same characteristics, with the addition of a further passage in which the piece food is treated, by means of a homogenizer, so as to obtain a homogeneous semi-finished product in the form of a cream.

Conveniently, in the case of food of animal origin, phase a) of providing such food takes place conventionally through the supply of meat pieces without unwanted parts (such as bones, cartilage, skin, etc.) and suitably precooked, for example in the form of meat sauce or stew. Appropriately, the meat pieces used are precooked without the use of oil.

Advantageously, the meat pieces are pre-treated by means a complete cooking and, conveniently, also in this case, a sampling is preferably carried out to test for their quality.

Advantageously, phase b) is carried out so that, at the end of this phase, the food has a temperature of about 60-65°C; opportunely, this can be obtained by bringing the food directly to the temperature of about 60-65°C.

Advantageously, phase b) is carried out by keeping the food, which has been provided, under stirring, until it reaches a temperature of 60-65° C.

Conveniently, phase b) of maintaining whole or in piece foods, or in the form of purée or cream, is carried out automatically by transferring these foods to preparatory plants through pipes assisted by pumps.

Advantageously, the preparatory systems comprise containers with heated walls which carry the mass of the foodstuffs at a temperature higher than about 60°C, preferably about 60-65°C. Conveniently, these containers are equipped with a propeller shaker designed to create a convective vortex actuated by a suitable electric motor in order to operate at speeds greater than 900 rpm, preferably higher than 1000 rpm.

Preferably, the preparatory system comprises a cutter equipped with a mixer and which, depending on the number of revolutions (variable from 1 to 3000 rpm), is able both to keep the food under stirring and to reduce it to cream.

Conveniently, phase b) takes a time long enough to bring the food to a temperature of 60-65°C. Preferably, for example, phase b) lasts from a minimum time of about 40-60 minutes (in the case of food of plant origin) to a maximum time of about 60-90 minutes (in the case of food of animal origin).

Advantageously, during this phase b), the pH is controlled and brought, depending to the type of food, to a value substantially between 1.2 and 5.6, and preferably between 1.2 and 4.6. Preferably, the pH is controlled by the addition of acidic substances for use in the food sector such as for example citric acid, lactic acid, ascorbic acid, hydrochloric acid, sorbic acid, phosphoric acid and their mixtures in a variable amount depending on the food and pH detected before the addition. Preferably, the pH is controlled using the glucone delta-lactone as acid, which advantageously has no typical aftertaste (as opposed to other acidity correctors such as citric acid and ascorbic acid) and can also be suitably prepared separately and then added to the food.

Advantageously, the pH value is controlled by means of a pH meter equipped with a thermometer to allow also a simultaneous temperature control. Preferably, the pH measurement takes place at a temperature of 20°C.

Preferably, the addition of acidic substances is carried out with a rain system while the mixture is kept under stirring.

Preferably, in the case of fruit or vegetable purées or creams, during this maintenance phase b), fructose is preferably added in quantities ranging from 0 to 30% continuously in a rain mode and not in solution. In particular, the addition of fructose allows densification of fruit-based purées in which the edible part of the fruit is made up of the juice, such as citrus fruit.

Preferably, during phase b) a substance or a composition is also added to lubricate the purée in such a way as to make it particularly slippery and therefore easy to swallow even for individuals who experience disturbances in the swallowing of dense and/or solid foods. Appropriately, such substances can be selected from those normally available on the market such as, for example, starches, lipids and gelling agents.

Suitably, phase c) of partial filling of the envelopes with the food is carried out when the latter is at a temperature of 60-65°C. Advantageously, by inserting the food into the envelope at a temperature of 60-65°C, on one hand the entry of undesirable bodies present in the external environment is avoided and on the other side the envelope is prevented from collapsing.

Advantageously, the phase c) of partial filling of the envelopes includes the transfer, always with a conventional automatic system, of the food, whole or chopped, or in the form of a purée or cream, to the dosing and packaging plant for carrying out the corresponding operations. In particular, the plant is configured to dose quantities of food ranging from a minimum of 100g up to a maximum of 10kg and, accordingly, envelopes of suitable size are used.

In particular, as said, the envelopes used are made of deformable and flexible material to allow their expansion/inflation and subsequent reduction, and therefore the variation of their internal volume. More in detail, the envelopes are designed to expand/inflate, without causing irreversible deformation, breakage or damage, in the presence of a pressure inside the envelope itself that can even reach up to about 3 atm.

Preferably, the envelopes to be used comprise exclusively layers of polymeric material, i.e. they are free from aluminium layers or films.

In particular, the envelopes to be used comprise at least one layer, preferably two or more, of plastic film for food use, such as, for example, polyvinylchloride, polyolefins, polyethylene, polypropylene, polyamide, polyester or combinations thereof.

Conveniently, the outer layer of the envelope is made of a material, for example polyester, which makes the envelope itself resistant to punctures and high temperatures. Conveniently, the intermediate layer of the envelope is made of a material, for example oriented polyamide or polyester, which constitutes a barrier to atmospheric agents. Conveniently, the inner layer of the envelope is made of a material, for example polypropylene, which is suitable for contact with food, as well as being suitable to impart the same flexibility and heat-tightness to the envelope.

Preferably, in one of its preferred embodiments, the envelope comprises, from the outside towards the inside, a polyester layer, preferably of about 12 µm in thickness, a layer of oriented polyamide, preferably of about 15 µm in thickness, and a layer of non-oriented polypropylene, preferably about 110 µm in thickness.

Preferably, in another embodiment, the envelope comprises, from the outside towards the inside, a polyester layer, an aluminium sheet, a polyester or polyamide layer, and a polypropylene or polyester layer. Preferably, the outer layer of polyester has a thickness of about 12 µm, the aluminium layer has a thickness of about 6.35 µm, the intermediate layer has a thickness of about 12 µm in the case of polyester or about 15 µm in the case of oriented polyamide, the inner layer has a thickness of about 75 µm in the case of non-oriented polypropylene or of about 12 µm in the case of polyester. In yet another embodiment, the envelope comprises a polyester layer, a metallized polyester layer and a polypropylene layer, from the outside inward. Preferably, the outer layer of polyester has a thickness of about 12 µm, the intermediate layer of metallized polypropylene has a thickness of about 18-21.35 µm, while the inner layer of polypropylene has a thickness of about 75 µm.

Advantageously, at most, at least one layer of polymeric material can be treated with a metallized paint; in this case it is however understood that the amount of metal resulting from the presence of the metallic paint is much lower than that provided for in the metal layers present in the traditional envelopes which are available on the market.

Advantageously, the envelope comprises a layer, preferably the intermediate layer, which is treated with a metallic paint which thus defines a protection barrier against ultraviolet rays.

Advantageously, the aforesaid layers are coupled together, for example, by conventional adhesives such as laminated adhesives, among which the two-components polyurethane-based products are preferred.

It should be kept in mind that the structure described above is endowed with advantageous chemical-physical characteristics since the tensile and the blocking properties allow to maintain the excellent organoleptic properties of the product. In particular, the tensile strength value in the machine direction and transversely (ASTM 0882-97) is 81 N/15 mm, the elongation value at break (ASTM 0882-97) in the machine direction is 100 ± 20% and transversely is 70 ± 20%, the oxygen permeability (ASTM 03985-95) is <0.1 cc/m2/24h and the moisture permeability is <0.1 g/m2/24h.

Conveniently, during phase c), the food is placed inside the envelope so to partially fill it, preferably so to fill it at most 70%, preferably 50%, of the useful volume. Advantageously, the partial filling of the envelope also allows to avoid that, during the dosing phase, the food may soil the upper inner edge of the envelope which can result in an unsuitable sealing during the subsequent welding phase; moreover, partial filling is necessary to allow expansion of the envelope volume during the thermal treatment phase.

Preferably, during the phase of sealing the envelope e), always automatically, the d) phase of creation of the vacuum is carried out. Suitably, during phase d) a vacuum is created inside the envelope so as to reach a pressure value of not less than about 0.2 bar.

Suitably, the envelopes, after being partially filled with the food, enter into a vacuum apparatus which is still open. Immediately the apparatus closes and the vacuum process begins, which is completed in 4 sub-phases:
- closing of the vacuum bell;
- crushing of the envelope by means of the pressers to push out the air;
- opening of the vacuum solenoid valve to create the vacuum, this sub-phase can be limited by time (i.e. setting the number of seconds required to perform the vacuum) or pressure (i.e. inside the chamber there is a pressure switch that stops the process once the desired pressure is reached).

Preferably, an inert gas can be introduced into the envelope, by means of conventional valves and nozzles, so as to fill the gas envelope until a set pressure is reached. In particular, the pressure varies according to the temperature, the specific weight of the food and the volume of the envelope. Appropriately, the set pressure must never fall below 0.2 bar, preferably it is between 0.3 bar and 0.8 bar. In any case, pressure adjustments based on the aforementioned specific weight and volume parameters are within reach of the sector technician who will set the vacuum machine appropriately.

Advantageously, the sealing phase e) of the envelope filled with the food can be carried out by means of an ultrasound system and/or bars provided with resistors which overheat, causing the plastic sheet to melt at the level of its opening. Preferably, the envelope welding is generally carried out for a time equal to about 1.5 seconds and this causes the envelope to be welded perfectly and ready to fall onto a conveyor belt placed immediately under the vacuum bell.

Conveniently, if after the sealing phase e) the inlet edges of the envelope slide with respect to one another, it means that the vacuum inside the envelope has not been created correctly.

Advantageously, the envelopes, partially filled with food and properly sealed, are then loaded into special baskets and sent to the subsequent thermal treatment phase f).

Advantageously, as said, the thermal treatment phase f) can be carried out by means of steam or an air/steam mixture or, preferably, by immersion, at least partial, in water.

Advantageously, to carry out the heat treatment by means of pressurized steam the envelopes are loaded into an autoclave. Appropriate autoclaves can be of the conventional type, not with continuous flow. In any case, it should be kept in mind that differences in the time, temperature and treatment pressure that may arise in carrying the process of the present invention from non-continuous flow to continuous flow are within the reach of the technician of the sector.

Advantageously, the thermal treatment using water is carried out by positioning and dipping the envelopes, with the food inside, in the water contained in a tank or in another suitable container. Preferably, the envelopes with the food float on the water contained in the tank which, preferably, is open at the top and, therefore, a pressure corresponding to the atmospheric pressure is exerted on the water and, in particular, the pressure is equal to about 1 atm. Suitably, the envelopes float on the water in a substantially vertical orientation; suitably, the part of envelope that is occupied by the food remains substantially below the water level.

Appropriately, the thermal treatment using water is particularly advantageous as it allows a lower energy consumption and, moreover, the treatment is more efficient as it allows a more homogeneous thermal exchange on the whole surface of the envelope. Moreover, this also facilitates and speeds up the loading of the envelopes, which can in fact be placed in bulk inside the tank and, in particular, it is not necessary to provide any support system for the envelopes themselves.

Appropriately, as mentioned, during the thermal treatment phase the pressure exerted on the outer walls of the envelope is kept constant and is never higher than about 1 atm (as opposed to the traditional methods in which pressures of about 2.2 atm are reached). Suitably, therefore, the envelope itself, partially filled with the food, expands/inflates (i.e. increases its internal volume) during the heating f1) and maintenance f2) sub-phases. Suitably, the envelope increases its internal volume in its part that is not occupied by the food.

Conveniently, during the heating sub-phase f1), the pressure outside the envelope (which is about 1 atm) is equal to or lower than the pressure present inside; in particular, during this phase, the external pressure remains constant at a Pₑ value, while the internal pressure varies and increases, passing from a first initial value Pᵢ₁ (that is of about 1 atm), in which it balances the external one Pₑ, to a second value Pᵢ₂ (for example to about 2.5 atm) which is greater than said first initial value Pᵢ₁. In particular, during this sub-phase f1), the envelope, partially filled with the food, increases its internal volume from an initial value Vᵢ₁ to a second value Vᵢ₂, which is greater than the initial value Vᵢ₁, and thus passes from an initial condition to an expanded/inflated condition.

Conveniently, during the maintenance sub-phase f2), the pressure outside the envelope (which is about 1 atm) always remains lower than the pressure present inside it; in particular, during this phase, the external pressure remains constant at a value Pₑ (which is about 1 atm) while the internal pressure remains constant at said second value Pᵢ₂ reached at the end of the heating sub-phase (i.e. at about 2.5 atm). In particular, during this sub-phase, the envelope, partially filled with the food, keeps said second volume value Vᵢ₂, which is greater than the initial value Vᵢ₁, and thus maintains the expanded/inflated condition reached.

Appropriately, during the sudden cooling sub-phase f3), the pressure outside the envelope (which is about 1 atm) is equal to or less than the pressure present inside; in particular, during this phase, the external pressure remains constant at a value Pₑ (which is about 1 atm) while the internal pressure varies and decreases, passing from said second value Pᵢ₂ (for example about 2.5 atm) - which has been reached and maintained during the previous sub-phases - at a value Pᵢ₁ in which the external pressure Pₑ (of about 1 atm) substantially balances out. In particular, during this sub-phase, the envelope, partially filled with the food, decreases its volume which passes from said second value Vᵢ₂ to the initial value Vᵢ₁ and, moreover, thus passes from the expanded/inflated condition to the initial condition.

Advantageously, this allows to use heating temperatures of about 80-95°C and in any case lower than the values of about or above 100°C which are usually used for traditional high pasteurisation processes.

Preferably, for food having a pH equal or close to 1.2, the heat treatment is carried out by bringing and keeping the envelope containing this food at a temperature of about 80-85°C. Conveniently, for food having a pH equal to or close to 4.6, the heat treatment is carried out by bringing and keeping the envelope containing this food at a temperature of about 95°.

Preferably, during the thermal treatment phase the pressure inside the autoclave or acting on the envelopes floating in the tank is substantially corresponding to the atmospheric one, preferably it is about 1 atm, in order to allow the expansion of the envelope, partially filled with food, during the sub-phases in which the temperature reaches and maintains about 80-95°C. More in detail, during the heating phases f1) and maintenance f2) sub-phases where the temperature is of about 80-95°C, the pressure inside the envelope increases with consequent expansion and increase of the internal volume of the same. Suitably, the envelope expands/inflates until it is superficially well taut.

Then, following the last sub-phase f3) in which sudden cooling takes place (thermal shock abatement), the envelope returns to its original condition and volume. Preferably, the third, sudden cooling (abatement), sub-phase f3) is carried out by introducing an inert gas inside the autoclave or cold water inside the tank.

The duration of the heat treatment cycle depends on the type of food and, preferably, can last about 60-90 minutes.

Advantageously, the heat treatment cycle f) is divided into:
- a first sub-phase f1) of sudden temperature rise up to about 80-95°C which lasts about 35 minutes or less,
- a second sub-phase f2) for maintaining the temperature of 80-95°C which lasts about 40 minutes or less, and
- a third sub-phase f3) of sudden cooling up to a temperature equal to or lower than about 14°C which lasts about 25 minutes or less, preferably less than about 15 minutes.

Preferably, the heat treatment cycle f) is divided into:
- a first sub-phase f1) of sudden temperature rise up to about 80-95°C which lasts about 15 minutes or less,
- a second sub-phase f2) for maintaining the temperature of 80-95°C which lasts about 30 minutes or less, and
- a third sub-phase f3) of sudden cooling up to a temperature lower than or equal to about 14°C with a maximum duration of about 15 minutes.

Preferably, the pressure variations are automatically managed by the autoclave control unit so as to keep the pressure inside the autoclave constant during the various sub-phases of the heat treatment cycle. Conveniently, during the heat treatment cycle f), the temperature variations between the various sub-phases are controlled automatically and, preferably, are controlled on the basis of the durations set for each of said sub-phases. Furthermore, in case of need, during the heat treatment cycle a direct intervention of the operator on the control panel can be foreseen in order to appropriately vary/regulate the pressure and/or the temperature and/or present inside the autoclave. and/or to vary the duration of the various sub-phases.

The fact that during the heating f1) and maintenance f2) sub-phases the temperatures of 80-95°C are used which are lower than the temperatures usually used in traditional cycles of high pasteurization or sterilization (equal to or higher than 100°C) - for example, EP2337459 provides for the use of a heating and holding temperature of 105°C - it is particularly advantageous in that it allows to speed up the heating sub-phase f1) since, being lower, the heating temperature is reached in a less time and, moreover, reduces the energy consumption required to reach and maintain this temperature.

At the end of the heat treatment cycle f), the procedure ends by picking up the envelopes from the autoclaves or the tank and sending them to the packaging department where the complete labels of legal indications are applied and the envelopes are inserted into cartons to be sent to the warehouse area. Appropriately, it is understood that despite its deformation during the thermal cycle, the envelope is in no way damaged on the surface and, therefore, is perfectly suitable for the subsequent labelling step.

As previously mentioned, the process of the invention may also be suitable for the preservation of fruit purées, to be used for the baking of cakes, ice creams, etc., for the preservation of vegetable purées for the preparation of, for example, vegetables, soups, homogenised food for children, for the preservation of meat sauce or stews, for the preservation of vegetables (such as radicchio, mushrooms, artichokes, etc.) and meat (chicken, tuna, etc.)

Appropriately, in the case of fresh fruit purée, the packaged food has a density value ranging from 1.00 to 1.10 g/ml, preferably from 1.02 to 1.08 g/ml calculated as above, and results also devoid of brown color and of the typical flavor of cooked fruit. In other words, the fruit purée produced according to the invention has a substantially identical appearance to that of the fresh pulp of the freshly harvested fruit and has a taste substantially identical to that of the pulp of the freshly harvested fruit.

From what has been said, it is clear that the process according to the invention is particularly advantageous compared to the traditional ones, as:
- the packaged food thus obtained can be stored and preserved even at room temperature for a period of time up to approx. 12-36 months from its production and for any type of food, both of plant origin and of animal origin, and the food can be whole, in pieces, in the form of puree or cream,
- the food contained in the envelopes is substantially devoid of bacterial count harmful to humans or in any case has a bacterial count so low that it is considered to be safely consumable according to all food regulations;
- during all phases of the process, the bacterial count does not undergo significant variations and, conversely, in cases of accidental contamination, the bacterial count is drastically reduced to a level considered perfectly safe for consumption,
- in the case of fruit purée the typical brown appearance and the flavor of cooked fruit are completely eliminated so as to impart to the product both the appearance and the taste of fresh and uncooked fruit,
- is simple, economical and does not require the use of treatment chemicals for storage,
- the use of an envelope container as described above further makes it possible to process the food in a very versatile and safe manner thanks to the particularly hygienic, robust and malleable structure; moreover, thanks to its own structure, the envelope once emptied allows easy disposal avoiding problems related to the dimensions or to compacting operations typical of rigid or semi-rigid wrappers in common use;
- the use of an envelope container without an aluminium layer allows to increase the flexibility of the walls and this allows a suitable expansion/enlargement of the envelope itself during the thermal treatment phase; moreover, this type of envelope container avoids the formation of surface folds due to expansion and subsequent shrinkage of the same, as well as allowing simpler and less expensive disposal.

In particular, the process according to the present invention is different:
- with respect to those presented in WO 92/03934, WO 92/08361 and EP 0415788 since it does not provide that the ambient temperature (which is about 20-25°C) is reached in the sudden cooling sub-phase, but provides that a temperature equal to or lower than 14°C is reached,
- compared to the one presented in US 2004/0156960 as it does not require that, immediately after the cooling sub-phase, the packaged product is immediately placed in a refrigerated environment at 1-4°C where it must then be stored until it is consumption,
- with respect to the one presented in WO97/02181 because for the heat treatment temperatures above 100°C are not used, but temperatures of 95°C or less are used,
- with respect to the one presented in WO2009/100509 since it does not include a phase, which is prior to closing the container, in which the open container is heated and the food inside; moreover, it does not provide that in the sudden cooling sub-phase the ambient temperature (which is about 20-25°C) is reached, but provides that a temperature equal to or lower than 14°C is reached;
- compared to that presented in RU2247519 because it does not provide for the temperature to be 28°C in the cooling sub-phase, but rather for a temperature equal to or lower than 14°C;

Moreover, the process according to the invention is different from those presented in WO 92/03934, WO 92/08361 and EP 0415788 and US 2004/0156960, WO97/02181, WO2009/100509 and RU2247519 since none of these provides at the same time that:
- the envelope, which must be made of expandable and flexible material, is partially filled with food and, in particular, so that the food occupies a maximum volume equal to about 70% of its useful volume,
- during the whole thermal treatment phase, the pressure externally exerted on the envelope (with the inside of the food) remains substantially equal to or less than the pressure present inside the envelope, thus allowing the latter first to increase its internal volume and then return substantially to its initial volume.

This is particularly advantageous since the food contained in the envelopes has a residual bacterial count lower than that obtainable by pasteurization and, in particular, is substantially equal to that obtainable by sterilization (thus allowing the conservation of the food packaged at room temperature), even if the heat treatment is carried out at temperatures lower than those normally foreseen for sterilization (which are about 100-120°C).

In particular, this is also demonstrated by the results of laboratory tests carried out to measure the residual concentration of microorganisms on some packaged foods obtained with the process according to the invention. More in detail, four different foods packaged according to the invention have the values shown in the following tables, where "QL" refers to the "Quantification limit" (i.e. the lowest detectable concentration), with "UFC" means "colony-forming units" (which is a measure of bacterial count) and with "n.d." it is meant that the value is not detectable and, therefore, is lower than "QL".

| **Pumpkin purée packed with the process according to the invention** | | | | |
|---|---|---|---|---|
| **Denomination** | **Units** | **Value** | **QL** | **Normative** |
| Counts of Bacillus cereus presumptive | UFC/g | **n.d.** | 10 | UNI EN ISO 7932:2005 |
| Total bacterial count at 30°C | UFC/g | **n.d.** | 10 | UNI EN ISO 4833-1 :2013 |
| Enterobatteriacee | UFC/g | **n.d.** | 5 | ISO 21528-2:2004 |
| Escherichia coli beta-glucuronidase positive | UFC/g | **n.d.** | 5 | ISO 16649-2:2001 |
| Listeria monocytogenes | | **Abs/25g** | | UNI EN ISO 11290-1:2005 |
| Salmonella spp. | | **Abs/25g** | | UNI EN ISO 6579:2008 |
| pH | | **4.6** | | AOAC 943.02 1997 |

| **Radicchio of Treviso purée obtained with the process according to the invention** | | | | |
|---|---|---|---|---|
| **Denomination** | **Units** | **Value** | **QL** | **Normative** |
| Counts of Bacillus cereus presumptive | UFC/g | **n.d.** | 10 | UNI EN ISO 7932:2005 |
| Total bacterial count at 30°C | UFC/g | **70** | 10 | UNI EN ISO 4833-1 :2013 |
| Enterobatteriacee | UFC/g | **n.d.** | 5 | ISO 21528-2:2004 |
| Escherichia coli beta-glucuronidase positive | UFC/g | **n.d.** | 5 | ISO 16649-2:2001 |
| Listeria monocytogenes | | **Abs/25g** | | UNI EN ISO 11290-1:2005 |
| Salmonella spp. | | **Abs/25g** | | UNI EN ISO 6579:2008 |
| pH | | **5.6** | | AOAC 943.02 1997 |

| **Raw potatoes in cubes obtained with the process according to the invention** | | | | |
|---|---|---|---|---|
| **Denomination** | **Units** | **Value** | **QL** | **Normative** |
| Total bacterial count at 30°C | UFC/g | **20.** | 10 | UNI EN ISO 4833-1:2013 |
| coliforms | UFC/g | **n.d.** | 5 | ISO 4832:2006 |
| Escherichia coli beta-glucuronidase positive | UFC/g | **n.d.** | 5 | ISO 16649-2:2001 |
| Listeria monocytogenes | | **Abs/25g** | | UNI EN ISO 11290-1:2005 |
| Salmonella spp. | | **Abs/25g** | | UNI EN ISO 6579:2008 |
| Positive coagulase staffilococci (at 37°C) | UFC/g | **n.d.** | 10 | UNI EN ISO 6888-1:2004 |

| **Venetian-style creamed cod obtained with the process according to the invention** | | | | |
|---|---|---|---|---|
| **Denomination** | **Units** | **Value** | **QL** | **Normative** |
| Total bacterial count at 30°C | UFC/g | **n.d.** | 10 | UNI EN ISO 4833-1:2013 |
| coliforms | UFC/g | **n.d.** | 5 | ISO 4832:2006 |
| Escherichia coli beta-glucuronidase positive | UFC/g | **n.d.** | 5 | ISO 16649-2:2001 |
| Listeria monocytogenes | | **Abs/25g** | | UNI EN ISO 11290-1:2005 |
| Salmonella spp. | | **Abs/25g** | | UNI EN ISO 6579:2008 |
| Positive coagulase staffilococci (at 37°C) | UFC/g | **n.d.** | 10 | UNI EN ISO 6888-1 :2004 |

## Claims

1. Process for the production of a packaged product, preferably of a packaged food product or of a packaged product to be used for cosmetics/phytocosmetics, **characterized in that** it comprises the sequence of the following phases:
a) provide a product to be packaged;
b) bringing said product to be packaged, which has been provided, at a temperature of 60-65°C;
c) partially filling with said product, which is at a temperature of 60-65°C an envelope of flexible and expandable material:
d) creating a vacuum inside said envelope;
e) sealing said envelope after the previous vacuum creation phase;
f) thermally treating the envelope thus obtained, and partially filled with said product, by successive sub-phases comprising:
1. a first heating sub-phase to bring the envelope to a temperature of about 80°- 95°C,
2. a second sub-phase of maintaining the envelope at the aforementioned temperature of about 80°- 95°C reached in the previous sub-phase, and
3. a third cooling sub-phase of the envelope to bring it to a temperature equal to or lower than about 14°C,
said process being **characterized in that**, during the sub-phase f2) of said thermal treatment phase, the pressure externally exerted on said envelope, which is partially filled by said product, remains always lower than the pressure present inside the envelope, thus allowing said envelope to vary its internal volume during said thermal treatment phase, and being further **characterized in that**:
- during the heating sub-phase f1), the pressure inside the envelope increases, passing from a first initial value, in which it substantially balances the pressure external to the envelope, to a second value that is greater than external pressure,
- during the maintenance sub-phase f2) of the heating temperature, the pressure outside the envelope remains always lower than the pressure that is present inside it,
during the rapid cooling sub-phase f3), the pressure inside the envelope varies and decreases, passing from said second value, which has been reached and maintained during the previous sub-phases, to a value in which substantially balances the external pressure, and
- during the heating sub-phase f1), the envelope, partially filled and occupied with the food, increases its internal volume from an initial value to a second value which is greater than the initial one, and thus passes from an initial condition to a dilated/expanded condition,
- during the maintenance sub-phase f2) of the heating temperature, the envelope, partially filled with the food, maintains the volume inside at said second value, which it is greater than the initial one, and thus maintains its achieved dilated/expanded condition,
- during the rapid cooling sub-phase f3), the envelope, partially filled and occupied with the food, decreases its volume which passes from said second value to the initial value, thus passing from the dilated/expanded condition to the initial condition.

2. Process according to claim 1, **characterized in that** during the thermal treatment phase the envelopes float on the water contained in a tank and that said heating f1), maintenance f2) and cooling f3) sub-phases are carried out by correspondingly controlling the temperature of the water of said tank.

3. Process according to one or more of the preceding claims, **characterized in that** the thermal treatment phase is carried out inside an autoclave.

4. Process according to one or more of the preceding claims, **characterized in that** it comprises a phase in which said product to be packaged is provided in pieces or as a purée or in the form of a cream.

5. Process according to one or more of the preceding claims, **characterized in that** it comprises a phase in which said product to be packaged is provided already cooked.

6. Process according to one or more of the preceding claims, **characterized in that**, before and/or during said phase b) in which the products are brought to a temperature equal to or greater than 60°C, the pH of said products is controlled and brought to a value between 1.2 and 5.6, preferably between 1.2 and 4.6.

7. Process according to one or more of the preceding claims, **characterized in that** the envelope is partially filled with said product when said product is at a temperature between about 60°C and 65°C.

8. Process according to one or more of the preceding claims, **characterized in that** said envelopes are made of food-grade material and are designed to expand and widen, without causing irreversible deformations, breakages or damage, in the presence of a pressure inside the envelope of about 3 atm.

9. Process according to one or more of the preceding claims, **characterized in that** said envelope comprises exclusively layers of polymeric material, that is without any metal layer or film.

10. Process according to one or more of the preceding claims from 1 to 8, **characterized in that** said envelope comprises a layer painted with metallized paint.

11. Process according to one or more of the preceding claims, **characterized in that**, in said partial filling phase of said envelope, the food is inserted inside the envelope so as to fill it at most for about 70% of its useful volume.

12. Process according to one or more of the previous claims, **characterized in that** said thermal treatment lasts about 60-90 minutes in which:
- said first heating sub-phase f1) up to a temperature of about 80-95°C with a duration equal to or less than about 35 minutes,
- said second maintenance sub-phase f2) of the temperature of 80-95°C has a duration equal to or less than about 40 minutes,
- said third cooling sub-phase f3) up to a temperature equal to or lower than about 14°C has a duration equal to or less than about 25 minutes, preferably less than about 15 minutes.

13. Process according to one or more of the preceding claims, **characterized in that** for products with a pH equal to or near 1.2 the thermal treatment is carried out at a temperature of about 80-85°C; and **in that** for products with a pH equal to or near 4.6 the thermal treatment is carried out at a temperature of about 95°C.

## Patentansprüche

1. Verfahren zur Herstellung eines verpackten Produkts, vorzugsweise eines verpackten Lebensmittelprodukts oder eines verpackten Produkts zur Verwendung für Kosmetika/Phytokosmetika, **dadurch gekennzeichnet, dass** es die Abfolge der folgenden Schritte umfasst:
a) Bereitstellen eines zu verpackenden Produkts;
b) Bringen des zu verpackenden Produkts, das bereitgestellt wurde, auf eine Temperatur von 60-65 °C;
c) teilweises Füllen einer Hülle aus flexiblem und dehnbarem Material mit dem Produkt, das eine Temperatur von 60-65 °C aufweist;
d) Erzeugen eines Vakuums in der Hülle;
e) Versiegeln der Hülle nach dem vorherigen Vakuumerzeugungsschritt;
f) Wärmebehandlung der so erhaltenen und teilweise mit dem Produkt gefüllten Hülle durch aufeinanderfolgende Teilschritte, umfassend:
1. einen ersten Heizteilschritt, um die Hülle auf eine Temperatur von etwa 80°-95°C zu bringen,
2. einen zweiten Teilschritt des Aufrechthaltens der Hülle auf der oben genannten Temperatur von etwa 80°-95°C, die im vorherigen Teilschritt erreicht wurde, und
3. einen dritten Kühlteilschritt der Hülle, um sie auf eine Temperatur gleich oder niedriger als etwa 14 °C zu bringen,
wobei das Verfahren **dadurch gekennzeichnet ist, dass** während des Teilschritts f2) des Wärmebehandlungsschritts der Druck, der von außen auf die Hülle ausgeübt wird, die teilweise mit dem Produkt gefüllt ist, immer niedriger bleibt als der Druck, der innerhalb der Hülle vorhanden ist, wodurch es der Hülle ermöglicht wird, ihr Innenvolumen während des Wärmebehandlungsschritts zu variieren, und ferner **dadurch gekennzeichnet ist, dass**:
- während der Heizteilschritts f1) der Druck innerhalb der Hülle ansteigt, indem er von einem ersten Anfangswert, in dem er den Druck außerhalb der Hülle im Wesentlichen ausgleicht, auf einen zweiten Wert, der größer als der Außendruck ist, übergeht,
- während des Aufrechthaltungsteilschritts f2) der Heiztemperatur der Druck außerhalb der Hülle stets niedriger bleibt als der, der in ihr vorhanden ist,
während des Schnellkühlungsteilschritts f3) der Druck innerhalb der Hülle variiert und abnimmt, indem er von dem zweiten Wert, der während des vorherigen Teilschritts erreicht und aufrechterhalten wurde, auf einen Wert übergeht, bei dem der Außendruck im Wesentlichen ausgeglichen ist, und
- während des Heizteilschritts f1) die mit dem Lebensmittel teilweise gefüllte und belegte Hülle ihr Innenvolumen von einem Anfangswert auf einen zweiten Wert, der größer als der Anfangswert ist, erhöht und somit von einem Anfangszustand auf einen aufgeweiteten/gedehnten Zustand übergeht,
- während des Aufrechthaltungsteilschritts f2) der Heiztemperatur die Hülle, die teilweise mit dem Lebensmittel gefüllt ist, das Volumen im Inneren auf dem zweiten Wert aufrechthält, der größer als der anfängliche ist, und behält somit ihren erreichten aufgeweiteten/gedehnten Zustand aufrecht,
- während des Schnellkühlungsteilschritts f3) die Hülle, die teilweise mit dem Lebensmittel gefüllt und belegt ist, ihr Volumen verringert, das von diesem zweiten Wert auf den Anfangswert übergeht, wodurch sie vom aufgeweiteten/gedehnten Zustand auf den Anfangszustand übergeht.

2. Verfahren nach Anspruch 1, **dadurch gekennzeichnet, dass** während des Wärmebehandlungsschritts die Hüllen auf dem in einem Tank enthaltenen Wasser schweben und dadurch, dass die Teilschritte zum Heizen f1), Aufrechthalten f2) und Kühlen f3) durch entsprechende Steuerung der Temperatur des Wassers des Tanks durchgeführt werden.

3. Verfahren nach einem oder mehreren der vorhergehenden Ansprüche, **dadurch gekennzeichnet, dass** die Wärmebehandlungsschritt innerhalb eines Autoklaven durchgeführt wird.

4. Verfahren nach einem oder mehreren der vorhergehenden Ansprüche, **dadurch gekennzeichnet, dass** es einen Schritt umfasst, in dem das zu verpackende Produkt in Stücken oder als Püree oder in Form einer Creme bereitgestellt wird.

5. Verfahren nach einem oder mehreren der vorhergehenden Ansprüche, **dadurch gekennzeichnet, dass** es einen Schritt umfasst, in dem das zu verpackende Produkt bereits gekocht bereitgestellt wird.

6. Verfahren nach einem oder mehreren der vorhergehenden Ansprüche, **dadurch gekennzeichnet, dass** vor und/oder während des Schritts b), in dem die Produkte auf eine Temperatur gleich oder größer als 60 °C gebracht werden, der pH-Wert der Produkte gesteuert und auf einen Wert zwischen 1,2 und 5,6, vorzugsweise zwischen 1,2 und 4,6, gebracht wird.

7. Verfahren nach einem oder mehreren der vorhergehenden Ansprüche, **dadurch gekennzeichnet, dass** die Hülle teilweise mit dem Produkt gefüllt wird, wenn sich das Produkt bei einer Temperatur zwischen etwa 60 °C und 65 °C befindet.

8. Verfahren nach einem oder mehreren der vorhergehenden Ansprüche, **dadurch gekennzeichnet, dass** die Hüllen aus lebensmittelechtem Material bestehen und so konzipiert sind, dass sie sich bei einem Druck innerhalb der Hülle von etwa 3 atm ausdehnen und aufweiten, ohne irreversible Verformungen, Brüche oder Beschädigungen zu verursachen.

9. Verfahren nach einem oder mehreren der vorhergehenden Ansprüche, **dadurch gekennzeichnet, dass** die Hülle ausschließlich Schichten aus polymerem Material, das heißt ohne Metallschicht oder -film, umfasst.

10. Verfahren nach einem oder mehreren der vorhergehenden Ansprüche 1 bis 8, **dadurch gekennzeichnet, dass** die Hülle eine mit metallisierter Farbe lackierte Schicht umfasst.

11. Verfahren nach einem oder mehreren der vorhergehenden Ansprüche, **dadurch gekennzeichnet, dass** im Schritt zur teilweisen Füllung der Hülle das Lebensmittel in die Hülle eingeführt wird, um sie höchstens für etwa 70 % ihres Nutzvolumens zu füllen.

12. Verfahren nach einem oder mehreren der vorhergehenden Ansprüche, **dadurch gekennzeichnet, dass** die Wärmebehandlung etwa 60-90 Minuten dauert, wobei:
- der erste Heizteilschritt f1) bis zu einer Temperatur von etwa 80-95°C mit einer Dauer gleich oder weniger als etwa 35 Minuten,
- der zweite Aufrechthaltungsteilschritt f2) der Temperatur von 80-95 °C eine Dauer von höchstens etwa 40 Minuten aufweist,
- der dritte Kühlungsteilschritt f3) bis zu einer Temperatur gleich oder niedriger als etwa 14 °C eine Dauer gleich oder weniger als etwa 25 Minuten, vorzugsweise weniger als etwa 15 Minuten, aufweist.

13. Verfahren nach einem oder mehreren der vorhergehenden Ansprüche, **dadurch gekennzeichnet, dass** für Produkte mit einem pH-Wert gleich oder nahe 1,2 die Wärmebehandlung bei einer Temperatur von etwa 80-85°C durchgeführt wird; und dadurch, dass für Produkte mit einem pH-Wert gleich oder nahe 4,6 die Wärmebehandlung bei einer Temperatur von etwa 95°C durchgeführt wird.

## Revendications

1. Procédé de fabrication d'un produit emballé, de préférence d'un produit alimentaire emballé ou d'un produit emballé destiné à être utilisé pour des cosmétiques/phytocosmétiques, **caractérisé en ce qu'**il comprend l'enchaînement des phases suivantes :
a) fournir un produit à emballer ;
b) porter ledit produit à emballer, qui a été fourni, à une température de 60-65°C ;
c) remplir partiellement avec ledit produit, qui est à une température de 60-65°C, une enveloppe en matériau souple et expansible ;
d) créer un vide à l'intérieur de ladite enveloppe ;
e) sceller ladite enveloppe après la phase précédente de création du vide ;
f) traiter thermiquement l'enveloppe ainsi obtenue, et partiellement remplie avec ledit produit, par des sous-phases successives comprenant :
1. une première sous-phase de chauffage pour amener l'enveloppe à une température d'environ 80°-95°C,
2. une deuxième sous-phase de maintien de l'enveloppe à la température susmentionnée d'environ 80°-95°C atteinte dans la sous-phase précédente, et
3. une troisième sous-phase de refroidissement de l'enveloppe pour l'amener à une température égale ou inférieure à environ 14°C,
ledit procédé étant **caractérisé en ce que**, pendant la sous-phase f2) de ladite phase de traitement thermique, la pression exercée extérieurement sur ladite enveloppe partiellement remplie par ledit produit reste toujours inférieure à la pression présente à l'intérieur de l'enveloppe, permettant ainsi à ladite enveloppe de faire varier son volume interne pendant ladite phase de traitement thermique, et étant en outre **caractérisé en ce que** :
- pendant la sous-phase de chauffage f1), la pression à l'intérieur de l'enveloppe augmente, passant d'une première valeur initiale, dans laquelle elle équilibre sensiblement la pression extérieure à l'enveloppe, à une seconde valeur qui est supérieure à la pression extérieure,
- pendant la sous-phase de maintien f2) de la température de chauffage, la pression à l'extérieur de l'enveloppe reste toujours inférieure à la pression présente à l'intérieur de celle-ci,
pendant la sous-phase de refroidissement rapide f3), la pression à l'intérieur de l'enveloppe varie et diminue, passant de ladite seconde valeur, qui a été atteinte et maintenue pendant les sous-phases précédentes, à une valeur qui équilibre sensiblement la pression extérieure, et
- pendant la sous-phase de chauffage f1), l'enveloppe, partiellement remplie et occupée par l'aliment, augmente son volume interne d'une valeur initiale à une seconde valeur supérieure à la valeur initiale, et passe ainsi d'un état initial à un état de dilatation/d'expansion,
- pendant la sous-phase de maintien f2) de la température de chauffage, l'enveloppe, partiellement remplie d'aliments, maintient le volume à l'intérieur à ladite seconde valeur, qui est supérieure à la valeur initiale, et maintient ainsi son état dilaté/expansé atteint,
- pendant la sous-phase de refroidissement rapide f3), l'enveloppe, partiellement remplie et occupée par l'aliment, diminue son volume qui passe de ladite seconde valeur à la valeur initiale, passant ainsi de l'état dilaté/expansé à l'état initial.

2. Procédé selon la revendication 1, **caractérisé en ce que** pendant la phase de traitement thermique les enveloppes flottent sur l'eau contenue dans un réservoir et que lesdites sous-phases de chauffage f1), de maintien f2) et de refroidissement f3) sont réalisées en contrôlant de manière correspondante la température de l'eau dudit réservoir.

3. Procédé selon l'une ou plusieurs des revendications précédentes, **caractérisé en ce que** la phase de traitement thermique est effectuée à l'intérieur d'un autoclave.

4. Procédé selon l'une ou plusieurs des revendications précédentes, **caractérisé en ce qu'**il comprend une phase dans laquelle ledit produit à emballer est fourni en morceaux ou sous forme de purée ou de crème.

5. Procédé selon l'une ou plusieurs des revendications précédentes, **caractérisé en ce qu'**il comprend une phase dans laquelle ledit produit à emballer est fourni déjà cuit.

6. Procédé selon l'une ou plusieurs des revendications précédentes, **caractérisé en ce que**, avant et/ou pendant ladite phase b) dans laquelle les produits sont portés à une température supérieure ou égale à 60°C, le pH desdits produits est contrôlé et amené à une valeur comprise entre 1,2 et 5,6, de préférence entre 1,2 et 4,6.

7. Procédé selon l'une ou plusieurs des revendications précédentes, **caractérisé en ce que** l'enveloppe est partiellement remplie avec ledit produit lorsque celui-ci est à une température comprise entre environ 60°C et 65°C.

8. Procédé selon l'une ou plusieurs des revendications précédentes, **caractérisé en ce que** lesdites enveloppes sont fabriquées dans un matériau de qualité alimentaire et sont conçues pour se dilater et s'élargir, sans provoquer de déformations irréversibles, de ruptures ou de dommages, en présence d'une pression à l'intérieur de l'enveloppe d'environ 3 atm.

9. Procédé selon l'une ou plusieurs des revendications précédentes, **caractérisé en ce que** ladite enveloppe comprend exclusivement des couches de matériau polymère, c'est-à-dire sans aucune couche ou film métallique.

10. Procédé selon l'une ou plusieurs des revendications précédentes de 1 à 8, **caractérisé en ce que** ladite enveloppe comprend une couche peinte avec une peinture métallisée.

11. Procédé selon l'une ou plusieurs des revendications précédentes, **caractérisé en ce que**, dans ladite phase de remplissage partiel de ladite enveloppe, l'aliment est inséré à l'intérieur de l'enveloppe de manière à la remplir au maximum d'environ 70 % de son volume utile.

12. Procédé selon l'une ou plusieurs des revendications précédentes, **caractérisé en ce que** ledit traitement thermique dure environ 60 à 90 minutes au cours desquelles :
- ladite première sous-phase de chauffage f1) jusqu'à une température d'environ 80-95°C avec une durée égale ou inférieure à environ 35 minutes,
- ladite deuxième sous-phase de maintien f2) de la température de 80-95°C a une durée égale ou inférieure à environ 40 minutes,
- ladite troisième sous-phase de refroidissement f3) jusqu'à une température égale ou inférieure à environ 14°C a une durée égale ou inférieure à environ 25 minutes, de préférence inférieure à environ 15 minutes.

13. Procédé selon l'une ou plusieurs des revendications précédentes, **caractérisé en ce que** pour les produits ayant un pH égal ou proche de 1,2, le traitement thermique est effectué à une température d'environ 80-85°C ; et **en ce que** pour les produits ayant un pH égal ou proche de 4,6, le traitement thermique est effectué à une température d'environ 95°C.
